# EUROPÄISCHE PATENTSCHRIFT

(11) **EP 2 961 623 B1**
(45) Veröffentlichungstag und Bekanntmachung des Hinweises auf die Patenterteilung: **05.04.2017**
(21) Anmeldenummer: 14712573.6
(22) Anmeldetag: 19.02.2014
(51) Int. Cl.: B60G 9/00, B60G 7/00, B60B 35/08, B60B 35/02, B21D 15/02, B21D 22/02, B21C 37/15

(54) **FAHRWERK FÜR EIN NUTZFAHRZEUG, ACHSKÖRPER SOWIE VERFAHREN ZUM HERSTELLEN EINES ACHSKÖRPERS**
CHASSIS FOR A COMMERCIAL VEHICLE, AXLE BODY AND METHOD FOR PRODUCING AN AXLE BODY
CHASSIS POUR VÉHICULE UTILITAIRE, CORPS D'ESSIEU AINSI QUE PROCÉDÉ DE FABRICATION D'UN CORPS D'ESSIEU

(30) Priorität: 28.02.2013 DE 102013003300
(43) Veröffentlichungstag der Anmeldung: 06.01.2016
(73) Patentinhaber: BPW Bergische Achsen KG, 51674 Wiehl (DE)
(72) Erfinder: LEIDIG, Hans-Josef, 51580 Reichshof (DE)
(74) Vertreter: Bungartz Christophersen Partnerschaft mbB Patentanwälte
(86) Internationale Anmeldenummer: PCT/DE2014/100062
(87) Internationale Veröffentlichungsnummer: WO 2014/131399

(56) Entgegenhaltungen:
- WO-A1-2010/066232
- DE-A1- 4 300 158
- DE-A1-102006 015 671
- DE-C1- 4 232 779
- DE-U1- 29 615 286
- GB-A- 778 422
- US-A- 1 209 134
- US-A- 1 689 989
- US-A- 1 872 196
- US-A- 2 205 893
- US-A- 4 220 277
- US-A1- 2011 067 846
- US-B1- 6 241 266

## Beschreibung

Die Erfindung betrifft ein Fahrwerk für ein Nutzfahrzeug mit einem Achskörper, der in einem Befestigungsabschnitt mit einem Achslenker verbunden ist, wobei das eine Ende des Achslenkers an dem Fahrzeugrahmen des Nutzfahrzeugs schwenkbar gelagert, und das andere Ende des Achslenkers über eine Luftfeder gegen den Fahrzeugrahmen abgestützt ist.

Die Erfindung betrifft ferner einen Achskörper, welcher Verwendung in einem solchen Fahrwerk finden kann.

Die Erfindung betrifft ferner ein Verfahren zum Herstellen eines derartigen Achskörpers.

Aus der WO 2010/066232 A1 ist ein Nutzfahrzeug-Fahrwerk bekannt, bei dem die Befestigung des Achskörpers an jedem der beiden Achslenker durch Klemmen des Achskörpers zwischen einem in Fahrtrichtung vorderen und einem in Fahrtrichtung hinteren Lenkerabschnitt des Achslenkers erfolgt. Zur Übertragung der Klemmkräfte sind die Lenkerabschnitte jeweils mit einer Schale versehen, an deren Innenseiten es zur Abstützung an dem Achskörper kommt. Da der Achskörper ein Vierkantrohr ist, werden auch Momente, wie sie z. B. während des Bremsens auftreten, von der Achseinbindung sicher übertragen.

Bekannt sind, unter anderem aus der DE 296 15 286 U1, auch bereits Fahrwerke unter Verwendung eines als ein Rundrohr gestalteten Achskörpers. An die Achseinbindung sind in diesem Fall erhöhte Anforderungen gestellt, um Momente und insbesondere Bremsmomente sicher vom Achsrohr auf die Achslenker übertragen zu können. Grundsätzlich haben Achsrohre mit einem runden Querschnitt Preisvorteile gegenüber Vierkantrohren, da letztere in der Regel aus Halbschalen zusammengeschweißt werden müssen.

Der Erfindung liegt die Aufgabe zugrunde, durch Einsatz kostengünstiger Achsrohre zu insgesamt günstigen Herstellkosten für den Achskörper und das den Achskörper beinhaltende Fahrwerk zu gelangen.

Zur **Lösung** dieser Aufgabe wird ein Fahrwerk für ein Nutzfahrzeug mit den Merkmalen des Anspruchs 1, ein Achskörper mit den Merkmalen des Anspruchs 10 und ein Verfahren zum Herstellen eines Achskörpers mit den Merkmalen des Anspruchs 18 vorgeschlagen.

Von Vorteil ist hierbei die Verwendung eines preiswert herstellbaren Achskörpers aus Rundrohr. Um gleichwohl hohe Momente und insbesondere Bremsmomente vom Achskörper auf den jeweiligen Achslenker übertragen zu können, ist das Rundrohr an der Achseinbindung, also auf dem Befestigungsabschnitt mit dem Achslenker, unter Ausbildung von Stützbereichen verformt. Diese Stützbereiche, an denen sich der Achslenker abstützt, sind also verformte Bereiche der ursprünglich kreisrunden Rohrwandung.

Auf dem größten Teil seiner Länge ist der Achskörper ein Rundrohr von kreisförmigem Achsquerschnitt. Auf dem Befestigungsabschnitt jedoch ist infolge des zuvor an dem Rundrohr durchgeführten Umformverfahrens der Achsquerschnitt nicht mehr kreisförmig, sondern ein Vierkant. An dem Vierkant befinden sich jene Stützflächen, an denen der Achskörper in dem umgebenden ein- oder zweiteiligen Achslenker eingeklemmt ist.

Der Vierkantquerschnitt im Befestigungsabschnitt setzt sich zusammen aus vier Wandabschnitten sowie dazwischen angeordneten Radienabschnitten, welche die vier Ecken bilden. Die Radienabschnitte erstrecken sich über jeweils mehr als 90°, vorzugsweise über 91° bis 95°. Die in Kontakt mit dem ein- oder zweiteiligen Achslenker stehenden Stützflächen befinden sich an den so verformten Umfangsabschnitten des Achsrohrs.

Mit einer bevorzugten Ausgestaltung wird vorgeschlagen, dass die verformte Rohrwandung auf den Wandabschnitten, also außerhalb der die Ecken bildenden Radienabschnitte, konkav gestaltet ist.

Mit einer weiteren Ausgestaltung wird vorgeschlagen, dass das Achsrohr auf den Radienabschnitten eine größere Wanddicke aufweist, als auf den dazwischen angeordneten Wandabschnitten.

Gemäß einer weiteren Ausgestaltung befinden sich die Stützflächen nicht auf den konkav verlaufenden Wandabschnitten, sondern auf den Radienabschnitten. Vorzugsweise befinden sich die Stützflächen auf solchen Teilbereichen der Radienabschnitte, die eine gemeinsame Tangente mit dem darauffolgenden Radienabschnitt des Vierkants haben.

Vorteilhafte Ausgestaltungen des erfindungsgemäßen Fahrwerks, des erfindungsgemäßen Achskörpers sowie des erfindungsgemäßen Verfahrens sind in den jeweiligen Unteransprüchen angegeben.

Weitere Vorteile und Einzelheiten ergeben sich aus der nachfolgenden Beschreibung von Ausführungsbeispielen, welche auf der Zeichnung dargestellt sind. Darin zeigen:
- Fig. 1: in einer Seitenansicht ein Nutzfahrzeug-Fahrwerk in einer ersten Ausführungsform;
- Fig. 2: in einer Seitenansicht ein Nutzfahrzeug-Fahrwerk in einer zweiten Ausführungsform;
- Fig. 3: eine Teilansicht des Achskörpers, wobei vor allem der Befestigungsabschnitt wiedergegeben ist;
- Fig. 4: den Achsrohrquerschnitt im Befestigungsabschnitt des Achskörpers entsprechend der in Fig. 3 eingezeichneten Schnittebene IV-IV;
- Fig. 5: in einer Seitenansicht ein Nutzfahrzeug-Fahrwerk in einer dritten Ausführungsform;
- Fig. 6: eine vergrößerte Darstellung des in Fig. 5 mit VI bezeichneten Befestigungsbereichs des Achskörpers im Achslenker;
- Fig. 7a: eine Stirnansicht auf eine Vorrichtung zum Verformen eines Rohrlängsabschnitts von einem kreisförmigen in einen viereckigen Rohrquerschnitt vor Beginn des Verformungsverfahrens und
- Fig. 7b: dieselbe Stirnansicht nach Abschluss des Verformungsverfahrens.

Die im folgenden beschriebenen Achsaufhängungen finden Anwendung vor allem für Fahrzeugachsen mit durchgehendem Achskörper. Derartige Fahrzeugachsen kommen vor allem bei Nutzfahrzeugen und insbesondere bei Lkw-Anhängern und -aufliegern zum Einsatz, da die Achsen für hohe Transportgewichte und Belastungen im Straßenbetrieb ausgelegt sind.

Unter Längsträgern eines hier nicht näher dargestellten Fahrwerks 1 ist auf jeder Fahrzeugseite eine Lenkerstütze 1A befestigt. Diese nimmt ein Schwenklager 1B für die Achsaufhängung auf. Zur Führung des von einer Fahrzeugseite zur anderen Fahrzeugseite starr durchgehenden Achskörpers 2 dient auf jeder Fahrzeugseite ein Achslenker 5. Der Achslenker 5 ist an seinem vorderen Ende mit einem einstückig angegossenen Lenkerauge versehen, welches Bestandteil des Schwenklagers 1B ist, um so mittels eines Bolzens den Achslenker 5 vertikal schwenkbar an der Lenkerstütze 1A zu halten.

In Fahrtrichtung hinten ist an dem Achslenker 5 eine Auflagefläche 6A für eine Luftfeder 6 ausgebildet. Die Luftfeder 6 stützt sich mit einer oberen Abschlussplatte von unten gegen den entsprechenden Längsträger des Fahrwerks 1 ab.

Der Achslenker 5 ist zweiteilig gestaltet. Er setzt sich zusammen aus einem in Fahrtrichtung vorderen Lenkerabschnitt 51 sowie einem in Fahrtrichtung hinteren Lenkerabschnitt 52. An dem hinteren Lenkerabschnitt 52 ist die Auflagefläche 6A für die Luftfeder 6 angeformt.

Der vordere Lenkerabschnitt 51 erstreckt sich von dem Lagerauge des Schwenklagers 1 B bis zu dem Achskörper 2. Der hintere Lenkerabschnitt 52 erstreckt sich von dem Achskörper 2 bis zu der Auflagefläche für die Luftfeder 6. Die Zweiteiligkeit des Achslenkers 5 ist von Vorteil, da durch Auswahl von Lenkerabschnitten 51, 52 in geeigneter Größe die fahrzeugspezifischen Abstände zwischen dem Schwenklager, dem Achskörper 2 und der Luftfeder 6 individuell, d. h. kundenspezifisch, realisierbar sind.

Der vordere Lenkerabschnitt 51 besteht aus Metallguss, vorzugsweise aus einem Sphärostahlguss. Vorzugsweise besteht auch der hintere Lenkerabschnitt 52 aus Metallguss, vorzugsweise einem Sphärostahlguss.

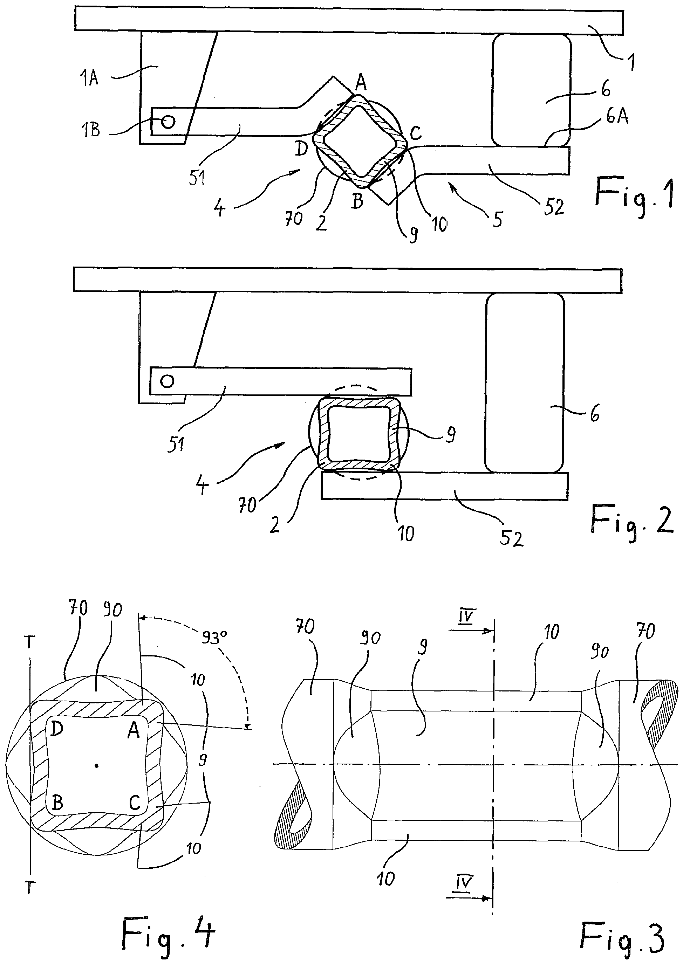

Der Achskörper 2 ist auf dem größten Teil seiner Länge ein preiswert herstellbares Rundrohr von kreisförmigem Achsquerschnitt. Auf einem Befestigungsabschnitt 4 jedoch (Fig. 3) ist infolge dort an dem Rundrohr durchgeführter Verformungsprozesse der Achsquerschnitt nicht mehr kreisförmig sondern vierkantig, was im Folgenden näher beschrieben wird.

Außerdem kann das Rundrohr 2 auch an seinen beiden Enden infolge dort durchgeführter Verformungsprozesse unrunde Querschnitte erhalten, z. B. um dort einen das Fahrzeugrad lagernden Achsschenkel oder einen Bremsträger besser befestigen zu können.

Bei den Ausführungsformen nach Fig. 1 und Fig. 2 ist die auf den Befestigungsabschnitt 4 beschränkte Verformung des Rundrohrs 2 dergestalt, dass durch Eindrücken von vier Umfangsabschnitten des Rundrohrs vier Rohrecken A, B, C, D und vier die Rohrecken verbindende Wandabschnitte zwischen den Rohrecken A, B, C, D entstehen. Der Wandabschnitt zwischen den beiden oberen Ecken A und D liegt gegen eine entsprechende Gegenstützfläche am vorderen Lenkerabschnitt 51 an, und der gegenüberliegend angeordnete Wandabschnitt zwischen den beiden unteren Ecken B und C liegt gegen eine entsprechende Gegenstützfläche am hinteren Lenkerabschnitt 52 an.

Gemeinsam ist allen hier beschriebenen Ausführungsformen des Achskörpers 2, dass auf dem Befestigungsabschnitt 4, der nur einen kleinen Teil der Gesamtlänge des Achsrohrs ausmacht, ein im Wesentlichen formschlüssiges Einklemmen des Achsrohrs zwischen den beiden Lenkerabschnitten 51, 52 erfolgt.

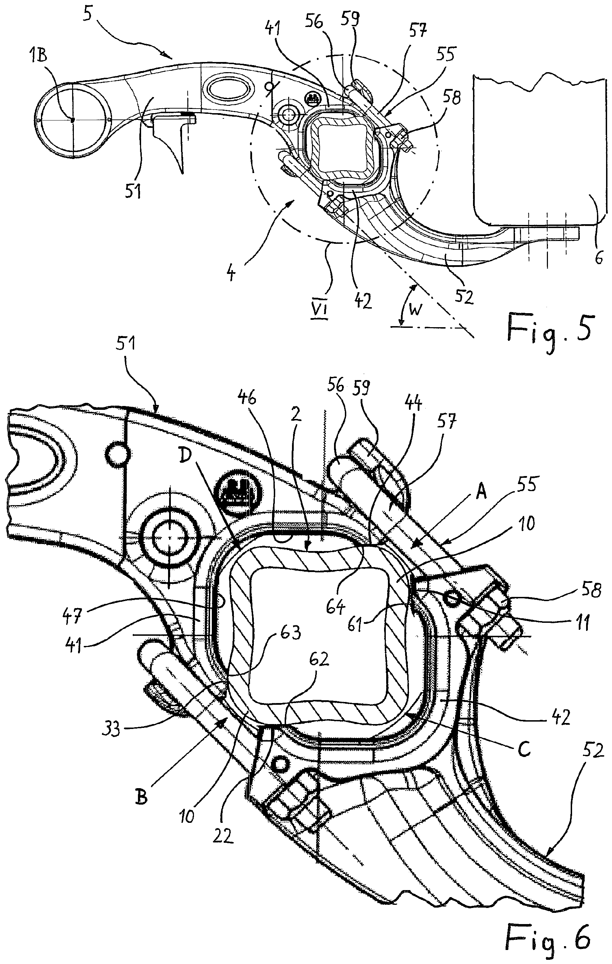

Bei den Ausführungsformen nach den Figuren 5 und 6 ist der vordere Lenkerabschnitt 51 des Achslenkers mit einer Schale 41, und auch der hintere Lenkerabschnitt 52 mit einer Schale 42 versehen. Die Schalen 41, 42 sind einstückiger Bestandteil der gegossenen Lenkerabschnitte 51, 52. An den Schalen 41, 42 weisen die Lenkerabschnitte 51, 52 ihre größte Breite auf.

Für einen optimalen Kraftverlauf im Achslenker 5 ist die Gussgestaltung so, dass der Lenkerabschnitt 51 nach schräg unten auf die Schale 41, und der Lenkerabschnitt 52 nach schräg oben auf die Schale 42 stößt.

Die Schalen 41, 42 weisen, dem Achskörper 2 zugewandt, jeweils eine erste Innenseite 46 und eine gemeinsam mit der ersten Innenseite einen Eckwinkel von ca. 90° bildende zweite Innenseite 47 auf. Die Abstützung der Lenkerabschnitte 51, 52 gegen den Achskörper 2 erfolgt aber nicht auf der ganzen Fläche der beiden Innenseiten 46, 47, sondern nur in einer dem Eckwinkel abgewandten Randzone der jeweiligen Innenseite. In dieser Randzone ist an jeder der zwei Innenseiten 46, 47 der Schale ein Vorsprung in Gestalt einer sich in Längsrichtung des Achskörpers 2 erstreckenden, ebenen Fläche ausgebildet. Der Vorsprung bildet auf diese Weise eine Stützfläche 61, 62, 63, 64, und ausschließlich an dieser Stützfläche 61, 62, 63, 64 findet der Kontakt zwischen dem Achskörper 2 und dem Achslenker 5 statt.

Mit den jeweils flach ausgebildeten und in einem Winkel von jeweils 90° zueinander angeordneten Stützflächen 61, 62, 63, 64 an den Innenseiten der Schalen 41, 42 stützen sich die Lenkerabschnitte 51, 52 gegen die entsprechenden Stützflächen 11, 22, 33, 44 am Achskörper 2 ab. Die Stützflächen 11, 22, 33, 44 befinden sich an den verformten Umfangsabschnitten des Achskörpers, denn sie sind hergestellt in Folge eines partiellen Eindrückens des ursprünglich kreisrunden Achskörpers 2 in einem Umformprozess.

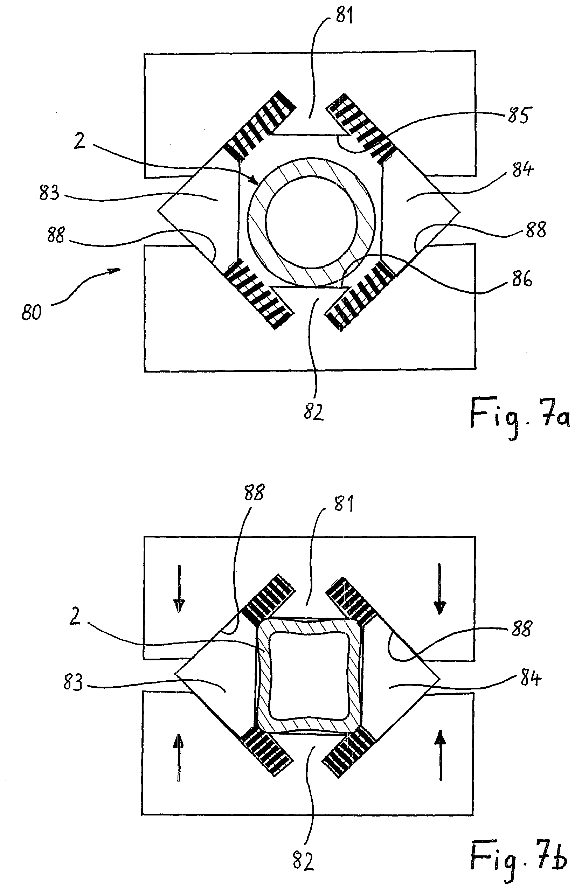

Zu diesem Zweck werden gemäß den Figuren 7a und 7b in einem mit vier aufeinander zu verfahrbaren Pressbacken ausgerüsteten Stauchwerkzeug vier Umfangsabschnitte der Rundrohrwandung nach innen eingedrückt und dabei dauerhaft verformt. Durch dieses Umformverfahren wird der ursprüngliche Kreisquerschnitt zu einem Quadratquerschnitt mit Rohrecken A, B, C, D.

Gemäß Figur 7a wird ein Rundrohr 2 in ein Presswerkzeug 80 so eingelegt, dass jener Längsabschnitt des Rundrohrs, der später der Befestigungsabschnitt 4 sein soll, im Bereich der Druckflächen der Presswerkzeugs 80 angeordnet ist. Bestandteile des Presswerkzeugs 80 sind ein Ober- und ein Unterwerkzeug 81, 82, deren Druckflächen 85, 86 zueinander gerichtet sind, sowie zwei Seitenpresswangen 83, 84, deren Druckflächen ebenfalls zueinander gerichtet sind. Durch gleichzeitiges, also simultanes gegeneinander Fahren der zwei Druckflächen 85, 86 und der zwei Druckflächen der Seitenpresswangen 83, 84 wird der Rohrabschnitt geformt, bis gemäß Fig. 7b

die Vierkantform mit vier Radienabschnitten 10 und vier konkav gestalteten Wandabschnitten 9 erreicht ist. Die simultane Bewegung der Pressbacken lässt sich erreichen, indem das Ober- und Unterwerkzeug 81, 82 die Seitenpresswangen 83, 84 über schräge Kulissenflächen 88 antreibt.

Vorzugsweise sind an den Enden der vier Werkzeuge zusätzliche Druckflächen ausgebildet, welche während des Umformverfahrens die zwei Übergänge 90 (Fig. 3) vom Befestigungsabschnitt 4 auf die runden Rohrlängsabschnitte formen.

Gemäß Figur 5 wird die erforderliche Klemmkraft des Achsrohrs 2 im Achslenker 5 durch Zugelemente 57 erreicht, welche die eine Schale 41 unter Zwischenlage des Befestigungsabschnitts 4 des Achskörpers 2 gegen die andere Schale 42 verspannen. Diese Verspannung erfolgt unter einem schrägen Winkel W zur Horizontalen.

Jede Schale 41, 42 weist, in Achsrichtung gesehen, eine Länge auf, die größer ist, als die sonstige Breite der Lenkerabschnitte 51, 52. Auf diese Weise ergibt sich in Achsrichtung eine lange Abstützung der Schalen 41, 42 an dem Befestigungsabschnitt 4. Es kommt beim Anziehen der Zugelemente 57 unter Erhöhung der Klemmspannung zu einem Klemmen der ähnlich einer flachen Leiste geformten Gegenstützflächen 61, 62, 63, 64 der Schalen an den Stützflächen 11, 22, 33, 44 des Achskörpers.

Bei montierter Achsaufhängung stützt sich die winkelförmige Schale 41 des vorderen Lenkerabschnitts 51 zugleich von oben und von vorne gegen den Achskörper 2 ab. Hingegen stützt sich die winkelförmige Schale 42 des hinteren Lenkerabschnitts 52 zugleich von unten und von hinten gegen den Achskörper ab. Die Innenseiten 46, 47 beider Schalen zusammen umschließen den Achskörper 2 nahezu über den gesamten Umfang. Es verbleibt also nur ein kleiner nicht umschlossener Umfangsabstand zwischen den Schalen. Dieser Umfangsabstand ist erforderlich, damit es unter keinen Umständen und auch nicht bei starker Torsionsbelastung der Achsaufhängung zu einer Berührung der Schalen 41, 42 kommt.

Die für das Klemmen des Befestigungsabschnitts 4 erforderliche Klemmkraft wird durch demontierbare Zugelemente erreicht, welche die Schale des vorderen Lenkerabschnitts 51 unter Zwischenlage des Achskörpers 2 gegen die Schale des hinteren Lenkerabschnitts 52 verspannen. Diese Verspannung erfolgt unter dem schrägen Winkel W zur Horizontalen. Sie erfolgt mittels zweier Gewindebügel 55, bestehend jeweils aus einem gebogenen Bügelabschnitt 56 und zwei geraden, zueinander parallelen Abschnitten 57, welche als die eigentlichen Zugelemente die Zugkraft übertragen. Im Bereich ihrer freien Enden sind die Abschnitte 57 mit Außengewinden versehen, auf die jeweils eine Gewindemutter 58 aufgeschraubt ist.

Der Bügelabschnitt 56 jedes Gewindebügels 55 ist um ein an dem vorderen Lenkerabschnitt 51 angeformtes Widerlager 59 herumgeführt. Bei den Widerlagern 59 handelt es sich um einstückig an dem Lenkerabschnitt 51 angeformte Nasen, die mit einer zu der Biegung des jeweiligen Bügelabschnitts 56 korrespondierenden Rille versehen sind.

Aufgrund der Anordnung der Gewindebügel 55 wird erreicht, dass sich im Bereich der Achseinbindung die Zugelemente 57 längs, d. h. parallel, des Verlaufs des Achslenkers 5 erstrecken, und sich die Enden der Zugelemente 57 mit den dort aufgeschraubten Muttern 58 nach hinten und schräg unten erstrecken. Durch dies Anordnung wird eine optimal geschützte Lage der Zugelemente erreicht, da es selbst im Fall einer extremen Einfederung des Achslenkers 5 zu keinem Kontakt mit den oberhalb angeordneten Chassisteilen des Fahrzeugs kommt.

Die Fig. 6 zeigt die Achseinbindung mit dem eingeklemmten Achsrohrabschnitt in einem gegenüber Fig. 5 vergrößerten Maßstab. Erkennbar ist, dass die Rohrwandung in dem Befestigungsabschnitt nicht eine runde Mantelfläche 70 wie auf den anderen Längsabschnitten des Achsrohrs aufweist, sondern eine Vierkantform mit vier Rohrecken A, B, C, D. Dies führt zu einer angenähert quadratischen Querschnittsgestalt mit insgesamt vier leicht zur Achsrohrmitte hin gebogenen Wandabschnitten 9 sowie vier deutlich stärker und nach außen hin gebogenen Radienabschnitten 10 im Übergang zwischen den Wandabschnitten 9 (Fig. 4). Die vier Eckenradien erstrecken sich nicht nur jeweils über einen Viertelkreis, also 90°, sondern die Radienabschnitte 10 zeigen jeweils einen Biegeverlauf von mehr als 90° und vorzugsweise einen Biegeverlauf, der 91° bis 95° beträgt. In Fig. 4 ist im Eckenbereich ein Verlauf der Radienabschnitte 10 über 93° eingezeichnet. Daraus folgt, dass die vier Wandabschnitte 9 nicht plan bzw. eben sind, sondern sie einen zum Achsmittelpunkt hin gebogenen, vorzugsweise einen gleichmäßig konkaven Verlauf zeigen.

Die Fig. 6 zeigt das Einklemmen eines solchen Achskörpers in einem zweiteiligen Achslenker. Zu erkennen ist, dass sich die im Kontakt zu dem Achslenker stehenden Stützflächen 11, 22, 33, 44 auf den nach außen hin gebogen verlaufenden Radienabschnitten 10 befinden, da die Radienabschnitte 10 durch ihre nach außen gerichtete Biegung bzw. Wölbung besonders geeignet zur Druckaufnahme und Druckübertragung sind. An dieser Stelle des Kontakts hat der jeweilige Radienabschnitt 10 eine gemeinsame Tangente T (Fig. 4) mit dem darauffolgenden Radienabschnitt 10.

Hingegen sind die konkav verlaufenden Wandabschnitte 9 frei von unmittelbarer Druckausübung durch den Achslenker.

Hinsichtlich der Anordnung des Achskörpers in Bezug auf die am Achslenker 5 ausgebildeten Gegenstützflächen 61, 62, 63, 64 gilt, dass sich die achsseitigen vier Stützflächen 11, 22, 33, 44 nur auf den Radienabschnitten der zwei Ecken A und B befinden. Hingegen sind die zwei anderen Ecken C und D hinsichtlich des Einklemmens des Achskörpers 2 ohne unmittelbare Funktion.

Fig. 6 lässt ferner erkennen, dass sich an dem Radienabschnitt 10 der Ecke A die erste Stützfläche 11 und die vierte Stützfläche 44 befindet, und dass sich an dem Radienabschnitt 10 der Ecke B die zweite Stützfläche 22 und die dritte Stützfläche 33 befindet. Die erste Stützfläche 11 und die zweite Stützfläche 22 sind ausschließlich gegen den einen, hier gegen den hinteren Lenkerabschnitt 52 abgestützt. Die dritte Stützfläche 33 und die vierte Stützfläche 44 sind ausschließlich gegen den anderen, hier gegen den vorderen Lenkerabschnitt 51 abgestützt.

### Bezugszeichenliste

- 1: Fahrwerk
- 1A: Lenkerstütze
- 1B: Schwenklager
- 2: Rundrohr, Achskörper
- 4: Befestigungsabschnitt
- 5: Achslenker
- 6: Luftfeder
- 6A: Auflagefläche für Luftfeder
- 9: Wandabschnitt
- 10: Radienabschnitt
- 11: Stützfläche
- 22: Stützfläche
- 33: Stützfläche
- 41: Schale
- 42: Schale
- 44: Stützfläche
- 46: Innenseite
- 47: Innenseite
- 51: vorderer Lenkerabschnitt
- 52: hinterer Lenkerabschnitt
- 55: Gewindebügel
- 56: gebogener Bügelabschnitt
- 57: Zugelement
- 58: Mutter
- 59: Widerlager
- 61: Gegenstützfläche
- 62: Gegenstützfläche
- 63: Gegenstützfläche
- 64: Gegenstützfläche
- 70: Mantelfläche
- 72: Rohrwandung
- 80: Presswerkzeug
- 81: Oberwerkzeug
- 82: Unterwerkzeug
- 83: Seitenpresswange
- 84: Seitenpresswange
- 85: Druckfläche
- 86: Druckfläche
- 88: Kulissenfläche
- 90: Übergang

- A: Ecke
- B: Ecke
- C: Ecke
- D: Ecke
- T: gemeinsame Tangente
- W: Winkel

## Patentansprüche

1. Fahrwerk für ein Nutzfahrzeug mit einem Achskörper (2), der in einem Befestigungsabschnitt (4) mit einem Achslenker (5) verbunden ist, dessen eines Ende an dem Fahrzeugrahmen (1) des Nutzfahrzeugs schwenkbar gelagert, und dessen anderes Ende über eine Luftfeder (6) gegen den Fahrzeugrahmen (1) abgestützt ist, wobei der Achskörper (2) in seinem Befestigungsabschnitt (4) mit einzelnen Stützflächen (11, 22, 33, 44) versehen und nur mit diesen Stützflächen gegen den Achslenker (5) abgestützt ist, **dadurch gekennzeichnet, dass** der Achskörper im Wesentlichen als ein Rundrohr (2) ausgebildet ist, welches im Befestigungsabschnitt (4) eine Verformung zu einem Vierkant aus Wandabschnitten (9) und dazwischen angeordneten Radienabschnitten (10) mit einem Biegeverlauf von mehr als 90° aufweist, und dass sich die Stützflächen (11, 22, 33, 44) an den verformten Umfangsabschnitten befinden.

2. Fahrwerk nach Anspruch 1, **dadurch gekennzeichnet, dass** die Wandabschnitte (9) einen zur Achsmitte hin gebogenen Verlauf zeigen, vorzugsweise einen konkaven Verlauf.

3. Fahrwerk nach Anspruch 1 oder 2, **dadurch gekennzeichnet, dass** der Biegeverlauf der Radienabschnitte (10) zwischen 91° und 95° beträgt.

4. Fahrwerk nach einem der vorangehenden Ansprüche, **dadurch gekennzeichnet, dass** das Achsrohr (2) in den Bereichen der Stützflächen (11, 22, 33, 44) eine andere Wanddicke aufweist, als auf den unverformten Rohrlängsabschnitten.

5. Fahrwerk nach einem der vorangehenden Ansprüche, **dadurch gekennzeichnet, dass** das Achsrohr (2) auf den Radienabschnitten (10) eine größere Wanddicke aufweist, als auf den Wandabschnitten (9).

6. Fahrwerk nach einem der vorangehenden Ansprüche, **dadurch gekennzeichnet, dass** sich die Stützflächen (11, 22, 33, 44) auf den Radienabschnitten (10) befinden.

7. Fahrwerk nach Anspruch 6, **dadurch gekennzeichnet, dass** sich die Stützflächen (11, 22, 33, 44) auf jenem Teilbereich der Radienabschnitte (10) befinden, die eine gemeinsame Tangente (T) mit dem darauffolgenden Radienabschnitt (10) des Vierkants haben.

8. Fahrwerk nach Anspruch 6 oder 7, **dadurch gekennzeichnet, dass** sich Stützflächen (11, 22, 33, 44) nur auf den Radienabschnitten (10) zweier einander diagonal abgewandter Ecken (A, B) der insgesamt vier Ecken (A, B, C, D) des Vierkants befinden.

9. Fahrwerk nach Anspruch 8, **dadurch gekennzeichnet, dass** der Achslenker (5) zweigeteilt ist und sich aus einem in Fahrtrichtung vorderen (51) und einem in Fahrtrichtung hinteren (52) Lenkerabschnitt zusammensetzt, dass sich an dem Radienabschnitt (10) der ersten der zwei Ecken eine erste (11) und eine vierte (44) Stützfläche, und an dem Radienabschnitt (10) der zweiten der zwei Ecken eine zweite (22) und eine dritte (33) Stützfläche befindet und dass die erste (11) und die zweite (22) Stützfläche ausschließlich gegen den einen der beiden Lenkerabschnitte, und die dritte (33) und die vierte (44) Stützfläche ausschließlich gegen den anderen der beiden Lenkerabschnitte abgestützt ist.

10. Achskörper mit einem Befestigungsabschnitt (4) zur Verbindung des Achskörpers mit einem Achslenker eines Fahrwerks und insbesondere Nutzfahrzeugfahrwerk, wobei der Achskörper in dem Befestigungsabschnitt (4) mit einzelnen Stützbereichen (11, 22, 33, 44) zum Abstützen gegen den Achslenker versehen ist, **dadurch gekennzeichnet, dass** der Achskörper im Wesentlichen als ein Rundrohr (2) ausgebildet ist, welches im Befestigungsabschnitt (4) eine Verformung zu einem Vierkant aus Wandabschnitten (9) und dazwischen angeordneten Radienabschnitten (10) mit einem Biegeverlauf von mehr als 90° aufweist, und dass sich die Stützflächen (11, 22, 33, 44) an den verformten Umfangsabschnitten befinden.

11. Achskörper nach Anspruch 10, **dadurch gekennzeichnet, dass** die Wandabschnitte (9) konkav gestaltet sind.

12. Achskörper nach Anspruch 10 oder 11, **dadurch gekennzeichnet, dass** der Biegeverlauf der Radienabschnitte (10) zwischen 91° und 95° beträgt.

13. Achskörper nach einem der Ansprüche 10 - 12, **dadurch gekennzeichnet, dass** das Achsrohr (2) in den Bereichen der Stützflächen (11, 22, 33, 44) eine andere Wanddicke aufweist, als auf den unverformten Rohrlängsabschnitten.

14. Achskörper nach einem der Ansprüche 10 - 13, **dadurch gekennzeichnet, dass** das Achsrohr (2) auf den Radienabschnitten (10) eine größere Wanddicke aufweist, als auf den Wandabschnitten (9).

15. Achskörper nach einem der Ansprüche 10 - 14, **dadurch gekennzeichnet, dass** sich die Stützflächen (11, 22, 33, 44) auf den Radienabschnitten (10) befinden.

16. Achskörper nach Anspruch 15, **dadurch gekennzeichnet, dass** sich die Stützflächen (11, 22, 33, 44) auf jenen Teilbereichen der Radienabschnitte (10) befinden, die eine gemeinsame Tangente (T) mit dem darauffolgenden Radienabschnitt (10) des Vierkants haben.

17. Achskörper nach Anspruch 15 oder 16, **dadurch gekennzeichnet, dass** sich Stützflächen (11, 22, 33, 44) nur auf den Radienabschnitten (10) zweier einander diagonal abgewandter Ecken (A, B) der insgesamt vier Ecken (A, B, C, D) des Vierkants befinden.

18. Verfahren zum Herstellen eines einen Befestigungsabschnitt (4) zur Verbindung mit einem Achslenker eines Fahrwerks und insbesondere Nutzfahrzeugfahrwerk aufweisenden, ursprünglich als Rundrohr (2) gestalteten Achskörpers (2), **gekennzeichnet durch** die Verfahrensschritte:
- Einlegen des Befestigungsabschnitts (4) in ein Presswerkzeug (80) mit Ober- und Unterwerkzeug (81, 82), deren Druckflächen (85, 86) zueinander gerichtet sind sowie mit Seitenpresswangen (83, 84), deren Druckflächen ebenfalls zueinander gerichtet sind,
- **durch** Gegeneinanderfahren der Druckflächen (85, 86) und Seitenpresswangen (83, 84) gleichzeitiges Verformen des Achskörperquerschnitts zu einem Vierkant aus Wandabschnitten (9) und dazwischen angeordneten Radienabschnitten (10) mit einem Biegeverlauf von mehr als 90°

19. Verfahren nach Anspruch 18, **dadurch gekennzeichnet, dass** alle Druckflächen simultan verfahren werden, indem das Ober- und Unterwerkzeug die Seitenpresswangen über schräge Kulissenflächen (88) antreibt.

## Claims

1. Chassis for a commercial vehicle with an axle body (2) which is connected in a fastening portion (4) to an axle link (5), the one end of which is mounted pivotably on the vehicle frame (1) of the commercial vehicle, and the other end of which is supported against the vehicle frame (1) via a pneumatic spring (6), wherein the axle body (2) is provided in its fastening portion (4) with individual supporting surfaces (11, 22, 33, 44) and is supported against the axle link (5) only by said supporting surfaces, **characterized in that** the axle body is substantially designed as a round tube (2) which, in the fastening portion (4), has a deformation, with a bending profile of more than 90°, to form a square consisting of wall portions (9) and radius portions (10) arranged in between, and **in that** the supporting surfaces (11, 22, 33, 44) are situated on the deformed circumferential portions.

2. Chassis according to Claim 1, **characterized in that** the wall portions (9) exhibit a profile which is curved towards the centre of the axle, preferably a concave profile.

3. Chassis according to Claim 1 or 2, **characterized in that** the bending profile of the radius portions (10) is between 91° and 95°.

4. Chassis according to one of the preceding claims, **characterized in that** the axle tube (2) has a different wall thickness in the region of the supporting surfaces (11, 22, 33, 44) than on the undeformed tube longitudinal portions.

5. Chassis according to one of the preceding claims, **characterized in that** the axle tube (2) has a greater wall thickness on the radius portions (10) than on the wall portions (9).

6. Chassis according to one of the preceding claims, **characterized in that** the supporting surfaces (11, 22, 33, 44) are situated on the radius portions (10).

7. Chassis according to Claim 6, **characterized in that** the supporting surfaces (11, 22, 33, 44) are situated on the partial region of the radius portions (10), which partial regions have a common tangent (T) with the following radius portion (10) of the square.

8. Chassis according to Claim 6 or 7, **characterized in that** supporting surfaces (11, 22, 33, 44) are situated only on the radius portions (10) of two corners (A, B), which face diagonally away from each other, of the total of four corners (A, B, C, D) of the square.

9. Chassis according to Claim 8, **characterized in that** the axle link (5) is divided into two and is composed of a front link portion (51) in the direction of travel and a rear link portion (52) in the direction of travel, **in that** a first supporting surface (11) and a fourth supporting surface (44) are situated on the radius portion (10) of the first of the two corners, and a second supporting surface (22) and a third supporting surface (33) are situated on the radius portion (10) of the second of the two corners, and **in that** the first supporting surface (11) and the second supporting surface (22) are supported exclusively against one of the two link portions, and the third supporting surface (33) and the fourth supporting surface (44) are supported exclusively against the other of the two link portions.

10. Axle body with a fastening portion (4) for connecting the axle body to an axle link of a chassis, and in particular commercial vehicle chassis, wherein the axle body is provided in the fastening portion (4) with individual supporting regions (11, 22, 33, 44) for support against the axle link, **characterized in that** the axle body is substantially designed as a round tube (2) which, in the fastening portion (4), has a deformation, with a bending profile of more than 90°, to form a square consisting of wall portions (9) and radius portions (10) arranged in between, and **in that** the supporting surfaces (11, 22, 33, 44) are situated on the deformed circumferential portions.

11. Axle body according to Claim 10, **characterized in that** the wall portions (9) are configured concavely.

12. Axle body according to Claim 10 or 11, **characterized in that** the bending profile of the radius portions (10) is between 91° and 95°.

13. Axle body according to one of Claims 10-12, **characterized in that** the axle tube (2) has a different wall thickness in the region of the supporting surfaces (11, 22, 33, 44) than on the undeformed tube longitudinal portions.

14. Axle body according to one of Claims 10-13, **characterized in that** the axle tube (2) has a greater wall thickness on the radius portions (10) than on the wall portions (9).

15. Axle body according to one of Claims 10-14, **characterized in that** the supporting surfaces (11, 22, 33, 44) are situated on the radius portions (10).

16. Axle body according to Claim 15, **characterized in that** the supporting surfaces (11, 22, 33, 44) are situated on those partial regions of the radius portions (10), which partial regions have a common tangent (T) with the following radius portion (10) of the square.

17. Axle body according to Claim 15 or 16, **characterized in that** supporting surfaces (11, 22, 33, 44) are situated only on the radius portions (10) of two corners (A, B), which face diagonally away from each other, of the total of four corners (A, B, C, D) of the square.

18. Method for producing an axle body (2) which has a fastening portion (4) for connecting to an axle link of a chassis and in particular commercial vehicle chassis and is originally configured as a round tube (2), **characterized by** the following method steps:
- placing the fastening portion (4) into a compression mould (80) having an upper die and lower die (81, 82), the pressure surfaces of which (85, 86) are directed towards each other, and also having side compression members (83, 84), the pressure surfaces of which are likewise directed towards each other,
- simultaneously deforming the axle body cross section, by moving the pressure surfaces (85, 86) and side compression members (83, 84) against each other, to form a square consisting of wall portions (9) and radius portions (10) arranged in between, with a bending profile of more than 90°.

19. Method according to Claim 18, **characterized in that** all of the pressure surfaces are moved simultaneously by the upper die and lower die driving the side compression members via oblique slotted guide surfaces (88).

## Revendications

1. Châssis de roulement pour un véhicule utilitaire comprenant un corps d'essieu (2) qui est relié dans une portion de fixation (4) à un guide d'essieu (5) dont une extrémité est supportée de manière pivotante au niveau du châssis de véhicule (1) du véhicule utilitaire, et dont l'autre extrémité est supportée par le biais d'un ressort pneumatique (6) contre le châssis de véhicule (1), le corps d'essieu (2) étant pourvu dans sa portion de fixation (4) de surfaces de support individuelles (11, 22, 33, 44) et étant seulement supporté avec ces surfaces de support contre le guide d'essieu (5), **caractérisé en ce que** le corps d'essieu est réalisé essentiellement sous forme de tube rond (2) qui présente dans la portion de fixation (4), une déformation en un parallélogramme constitué de portions de paroi (9) et de portions de courbure (10) disposées entre elles avec une courbure de plus de 90°, et **en ce que** les surfaces de support (11, 22, 33, 44) sont situées au niveau des portions périphériques déformées.

2. Châssis de roulement selon la revendication 1, **caractérisé en ce que** les portions de paroi (9) présentent une allure courbée vers le centre de l'essieu, de préférence une allure concave.

3. Châssis de roulement selon la revendication 1 ou 2, **caractérisé en ce que** l'allure courbée des portions de courbure (10) est comprise entre 91° et 95°.

4. Châssis de roulement selon l'une quelconque des revendications précédentes, **caractérisé en ce que** le tube d'essieu (2) présente dans les régions des surfaces de support (11, 22, 33, 44) une épaisseur de paroi différente de celle sur les portions de longueur de tube non déformées.

5. Châssis de roulement selon l'une quelconque des revendications précédentes, **caractérisé en ce que** le tube d'essieu (2) présente au niveau des portions de courbure (10) une plus grande épaisseur de paroi qu'au niveau des portions de paroi (9).

6. Châssis de roulement selon l'une quelconque des revendications précédentes, **caractérisé en ce que** les surfaces de support (11, 22, 33, 44) se trouvent sur les portions de courbure (10).

7. Châssis de roulement selon la revendication 6, **caractérisé en ce que** les surfaces de support (11, 22, 33, 44) se trouvent sur la région partielle des portions de courbure (10) qui présentent une tangente commune (T) avec la portion de courbure suivante (10) du parallélogramme.

8. Châssis de roulement selon la revendication 6 ou 7, **caractérisé en ce que** les surfaces de support (11, 22, 33, 44) se trouvent seulement sur les portions de courbure (10) de deux coins (A, B) diagonalement opposés l'un à l'autre des quatre coins totaux (A, B, C, D) du parallélogramme.

9. Châssis de roulement selon la revendication 8, **caractérisé en ce que** le guide d'essieu (5) est divisé en deux et se compose d'une portion de bras avant (51) dans la direction de conduite et d'une portion de bras arrière (52) dans la direction de conduite, **en ce qu'**au niveau de la portion de courbure (10) du premier des deux coins, se trouvent une première (11) et une quatrième (44) surface de support, et au niveau de la portion de courbure (10) du deuxième des deux coins se trouvent une deuxième (22) et une troisième (33) surface de support et **en ce que** la première (11) et la deuxième (22) surface de support sont supportées exclusivement contre l'une des deux portions de bras et la troisième (33) et la quatrième (44) surface de support sont supportées exclusivement contre l'autre des deux portions de bras.

10. Corps d'essieu comprenant une portion de fixation (4) pour raccorder le corps d'essieu à un guide d'essieu d'un châssis de roulement et notamment d'un châssis de roulement de véhicule utilitaire, le corps d'essieu étant pourvu dans la portion de fixation (4) de régions de support individuelles (11, 22, 33, 44) pour le support contre le guide d'essieu, **caractérisé en ce que** le corps d'essieu est réalisé essentiellement sous forme de tube rond (2) qui présente, dans la portion de fixation (4), une déformation en un parallélogramme constitué de portions de paroi (9) et de portions de courbure (10) disposées entre elles avec une courbure de plus de 90°, et **en ce que** les surfaces de support (11, 22, 33, 44) sont situées au niveau des portions périphériques déformées.

11. Corps d'essieu selon la revendication 10, **caractérisé en ce que** les portions de paroi (9) sont configurées sous forme concave.

12. Corps d'essieu selon la revendication 10 ou 11, **caractérisé en ce que** l'allure courbée des portions de courbure (10) est comprise entre 91° et 95°.

13. Corps d'essieu selon l'une quelconque des revendications 10 à 12, **caractérisé en ce que** le tube d'essieu (2) présente dans les régions des surfaces de support (11, 22, 33, 44) une épaisseur de paroi différente de celle sur les portions de longueur de tube non déformées.

14. Corps d'essieu selon l'une quelconque des revendications 10 à 13, **caractérisé en ce que** le tube d'essieu (2) présente au niveau des portions de courbure (10) une plus grande épaisseur de paroi qu'au niveau des portions de paroi (9).

15. Corps d'essieu selon l'une quelconque des revendications 10 à 14, **caractérisé en ce que** les surfaces de support (11, 22, 33, 44) se trouvent sur les portions de courbure (10).

16. Corps d'essieu selon la revendication 15, **caractérisé en ce que** les surfaces de support (11, 22, 33, 44) se trouvent sur les régions partielles des portions de courbure (10) qui présentent une tangente commune (T) avec la portion de courbure suivante (10) du parallélogramme.

17. Corps d'essieu selon la revendication 15 ou 16, **caractérisé en ce que** les surfaces de support (11, 22, 33, 44) se trouvent seulement sur les portions de courbure (10) de deux coins (A, B) diagonalement opposés l'un à l'autre des quatre coins totaux (A, B, C, D) du parallélogramme.

18. Procédé de fabrication d'un corps d'essieu (2) configuré initialement sous forme de tube rond (2), présentant une portion de fixation (4) pour la connexion à un guide d'essieu d'un châssis de roulement et notamment d'un châssis de roulement de véhicule utilitaire, **caractérisé par** les étapes de procédé suivantes :
- insertion de la portion de fixation (4) dans un outil de pressage (80) avec un outil supérieur et un outil inférieur (81, 82), dont les surfaces de pressage (85, 86) sont orientées l'une vers l'autre et avec des joues de pressage latérales (83, 84) dont les surfaces de pressage sont également orientées l'une vers l'autre,
- déformation simultanée, par déplacement l'une vers l'autre des surfaces de pressage (85, 86) et des joues de pressage latérales (83, 84), de la section transversale du corps d'essieu pour former un parallélogramme constitué de portions de paroi (9) et de portions de courbure (10) disposées entre elles avec une courbure supérieure à 90°.

19. Procédé selon la revendication 18, **caractérisé en ce que** toutes les surfaces de pressage sont déplacées simultanément par le fait que l'outil supérieur et l'outil inférieur entraînent les joues de pressage latérales sur des surfaces de coulisse obliques (88).
